# EUROPEAN PATENT SPECIFICATION

(11) **EP 4 592 636 B1**
(45) Date of publication and mention of the grant of the patent: **14.10.2026**
(21) Application number: 23888428.2
(22) Date of filing: 16.10.2023
(51) Int. Cl.: G01B 5/012, G01B 5/00, F16C 11/04

(54) **MEASURING HEAD, AND ROCKING FULCRUM MEMBER USED THEREIN**
MESSKOPF UND DARIN VERWENDETES SCHWINGDREHPUNKTELEMENT
TÊTE DE MESURE ET ÉLÉMENT DE PIVOT BASCULANT UTILISÉ DANS CELLE-CI

(30) Priority: 07.11.2022 JP 2022177889
(43) Date of publication of application: 30.07.2025
(73) Proprietor: Tokyo Seimitsu Co., Ltd., Hachioji-shi, Tokyo 192-8515 (JP)
(72) Inventor: OKABE, Satoshi, Tsuchiura-shi, Ibaraki 300-0015 (JP); WATANABE, Tomohito, Tsuchiura-shi, Ibaraki 300-0015 (JP)
(74) Representative: Seemann & Partner Patentanwälte mbB
(86) International application number: PCT/JP2023/037331
(87) International publication number: WO 2024/101075

(56) References cited:
- WO-A1-2010/092702
- JP-A- 2004 127 476
- JP-A- 2005 010 019
- JP-A- 2005 249 038
- JP-A- 2015 021 908
- US-A- 5 816 867
- US-A1- 2004 255 703
- US-A1- 2020 256 659

## Description

### Field

The present disclosure relates to a rocking fulcrum member used in a measuring head and a measuring head, which can be used in a machine control gauge built into a grinding machine or the like, a surface roughness/contour measuring machine, and the like, specially to a measuring head using a cross-shaped spring rocking fulcrum member.

### Background

Conventionally, a measuring head that operates an arm with a contactor attached to the tip end in the up-and-down direction by the principle of leverage has been widely used. For example, such a measuring head is used in a machine control gauge and contour measurement. Then, when a cross-shaped spring is used as a fulcrum for supporting a measuring arm, it is known that the measurable range is extended and highly accurate measurement is possible.

Moreover, in JP 2005-249038 A, to obtain a cross-shaped spring at a low cost, with less variations in the spring characteristics, and that can be easily assembled, a first plate-shaped elastic portion and a second plate-shaped elastic portion that form the cross-shaped spring is formed with a continuous body molded from a piece of plate-shaped elastic body.

In addition, US 2004/0255703 A1 describes a measuring head comprising a damper apparatus which absorbs an impact and a vibration of a contact, used for a machine control gauge or a surface roughness profile shape measuring machine

Moreover, US 2020/0256659 A1 discloses a device for measuring the concentricity of an internal toothing of a shaft, having a determination segment comprising a spindle unit, a spindle holder, an adjusting element and a measuring unit.

### Citation List

### Patent Literature

JP 2005-249038 A
US 2004/0255703 A1
US 2020/0256659 A1

### Summary

### Technical Problem

A rocking fulcrum member, disclosed in JP 2005-249038 A, is configured as a continuous body combined with two plate-shaped elastic portions, and has excellent features such as less variations and easy to assemble.

However, the present inventors have found that there is room for improvement in terms of stable measurement results and protection properties on the workpiece surface (resistance to scratching the workpiece), using a detector such as a lever type detector including the rocking fulcrum member in JP 2005-249038 A.

An object of the present disclosure is to provide a measuring head that can obtain excellent and stable measurement results or excellent protection properties on a workpiece surface, when applied to a detector such as a lever type detector. Moreover, another object of the present disclosure is to provide a rocking fulcrum member.

### Solution to Problem

The object is solved by a rocking fulcrum member used in the measuring head according to claim 1. Preferred embodiments of the rocking fulcrum member are described in the dependent claims 2 and 3. Another solution of the object is provided by a measuring head comprising a rocking fulcrum member according to the invention. Preferred embodiments of the measuring head are described in the dependent claims 5 and 6.

One embodiment of a measuring head of the present disclosure is a measuring head that includes a rocking fulcrum member configured to support an arm member having a tip end to which a contactor is attached, the measuring head detecting an amount of movement of the contactor by detecting an amount of movement of the arm member making a seesaw motion, in which the rocking fulcrum member is configured as a cross-shaped spring with a cross-shaped thin plate part, the cross-shaped spring having a hole penetrating a center part of the cross-shaped spring.

One embodiment of a rocking fulcrum member of the present disclosure is a rocking fulcrum member used in a measuring head, the member being a rocking fulcrum member configured to support an arm member having a tip end to which a contactor is attached, the measuring head detecting an amount of movement of the contactor by detecting an amount of movement of the arm member making a seesaw motion, in which the rocking fulcrum member is configured as a cross-shaped spring with a cross-shaped thin plate part, the cross-shaped spring having a hole penetrating a center part of the cross-shaped spring.

### Advantageous Effects of Invention

According to the present disclosure, when applied to a detector such as a lever type detector, a measuring head that can obtain excellent and stable measurement results, or that can obtain excellent protection properties on a workpiece surface is provided. Moreover, according to the present disclosure, a rocking fulcrum member is also provided.

### Brief Description of Drawings

FIG. 1A is a perspective view illustrating the stress distribution due to the rotational load around the Z-axis of a cross-shaped spring 10 according to an embodiment (with a hole).
FIG. 1B is a perspective view illustrating the stress distribution due to the torsional load around the X-axis of the cross-shaped spring 10 according to the embodiment (with a hole).
FIG. 1C is a perspective view illustrating the stress distribution due to the torsional load around the Y-axis of the cross-shaped spring 10 according to the embodiment (with a hole).
FIG. 2A is a perspective view illustrating the stress distribution due to the rotational load around the Z-axis of a conventional cross-shaped spring 10 (without a hole).
FIG. 2B is a perspective view illustrating the stress distribution due to the torsional load around the X-axis of the conventional cross-shaped spring 10 (without a hole).
FIG. 2C is a perspective view illustrating the stress distribution due to the torsional load around the Y-axis of the conventional cross-shaped spring 10 (without a hole).
FIG. 3A is a perspective view illustrating the deformation distribution due to the rotational load around the Z-axis when there is no hole (conventional example).
FIG. 3B is a perspective view illustrating the deformation distribution due to the rotational load around the Z-axis when there is a hole (embodiment).
FIG. 4A is a perspective view illustrating the stress distribution due to the torsional load around the X-axis when there is no hole (conventional example).
FIG. 4B is a perspective view illustrating the stress distribution due to the torsional load around the X-axis when there is a hole (embodiment).
FIG. 5A is a perspective view illustrating the stress distribution due to the torsional load around the Y-axis when there is no hole (conventional example).
FIG. 5B is a perspective view illustrating the stress distribution due to the torsional load around the Y-axis when there is a hole (embodiment).
FIG. 6A is a perspective view illustrating the (vertical) deformation distribution in the Y-axis direction due to the torsional load around the X-axis when there is no hole (conventional example).
FIG. 6B is a perspective view illustrating the (vertical) deformation distribution in the Y-axis direction due to the torsional load around the X-axis when there is a hole (embodiment).
FIG. 7A is a perspective view illustrating the (longitudinal) deformation distribution in the X-axis direction due to the torsional load around the Y-axis when there is no hole (conventional example).
FIG. 7B is a perspective view illustrating the (longitudinal) deformation distribution in the X-axis direction due to the torsional load around the Y-axis when there is a hole (embodiment).
FIG. 8A is a perspective view illustrating the (vertical) deformation distribution in the Y-axis direction due to the torsional load around the X-axis, when the crossing angle of a thin plate part 10-1 in the Y-axis direction is a wide angle.
FIG. 8B is a perspective view illustrating the (vertical) deformation distribution in the Y-axis direction due to the torsional load around the X-axis, when the crossing angle of the thin plate part 10-1 in the Y-axis direction is a narrow angle.
FIG. 9A is a perspective view illustrating the (longitudinal) deformation distribution in the X-axis direction due to the torsional load around the Y-axis, when the crossing angle of the thin plate part 10-1 in the Y-axis direction is a wide angle.
FIG. 9B is a perspective view illustrating the (longitudinal) deformation distribution in the X-axis direction due to the torsional load around the Y-axis, when the crossing angle of the thin plate part 10-1 in the Y-axis direction is a narrow angle.
FIG. 10 is a sectional view of a measuring head 80 using the cross-shaped spring 10.
FIG. 11 is a perspective view illustrating the way how the measuring head 80 is measuring while a workpiece W is being processed.

### Description of Embodiments

A first embodiment of a measuring head of the present disclosure is a measuring head that includes a rocking fulcrum member configured to support an arm member having a tip end to which a contactor is attached, the measuring head detecting an amount of movement of the contactor by detecting an amount of movement of the arm member making a seesaw motion, in which the rocking fulcrum member is configured as a cross-shaped spring with a cross-shaped thin plate part, the cross-shaped spring having a hole penetrating a center part of the cross-shaped spring.

In the first embodiment, a second embodiment of the measuring head of the present disclosure is the measuring head in which diameter of the hole is 1/4 to 1/2 width of a block width H of the cross-shaped spring.

In the first or second embodiment, a third embodiment of the measuring head of the present disclosure is the measuring head in which shape of the hole is an elongated hole or a polygon, and a periphery of the hole is rounded.

In the first or second embodiment, a fourth embodiment of the measuring head of the present disclosure is the measuring head in which the cross-shaped spring is integrally formed by cutting out metal using a wire cutting process.

In the first or second embodiment, a fifth embodiment of the measuring head of the present disclosure is the measuring head in which in the cross-shaped spring, one of crossing angles in an X-axis direction and a Y-axis direction is a narrower angle than another.

A first embodiment of a rocking fulcrum member of the present disclosure is a rocking fulcrum member used in a measuring head, the member being a rocking fulcrum member configured to support an arm member having a tip end to which a contactor is attached, the measuring head detecting an amount of movement of the contactor by detecting an amount of movement of the arm member making a seesaw motion, in which the rocking fulcrum member is configured as a cross-shaped spring with a cross-shaped thin plate part, the cross-shaped spring having a hole penetrating a center part of the cross-shaped spring.

In the first embodiment, a second embodiment of the rocking fulcrum member of the present disclosure is the rocking fulcrum member in which diameter of the hole is 1/4 to 1/2 width of a block width H of the cross-shaped spring.

In the first or second embodiment, a third embodiment of the rocking fulcrum member of the present disclosure is the rocking fulcrum member in which in the cross-shaped spring, one of crossing angles in an X-axis direction and a Y-axis direction is a narrower angle than another.

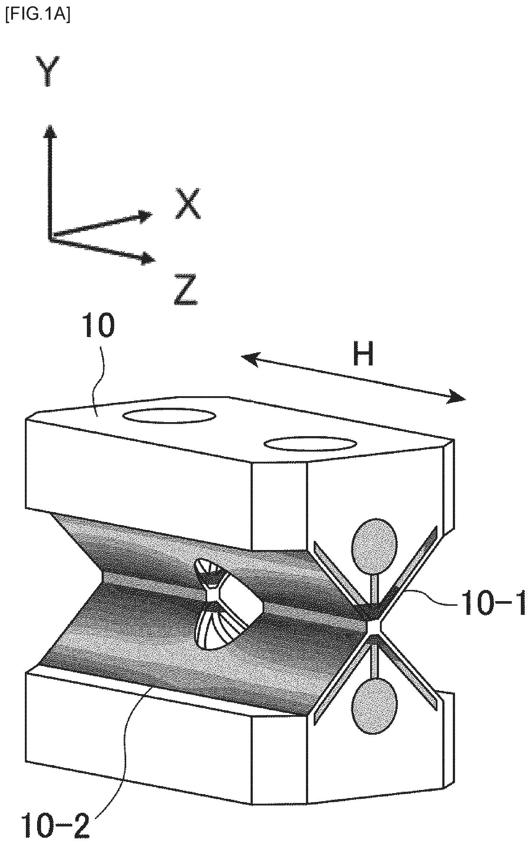

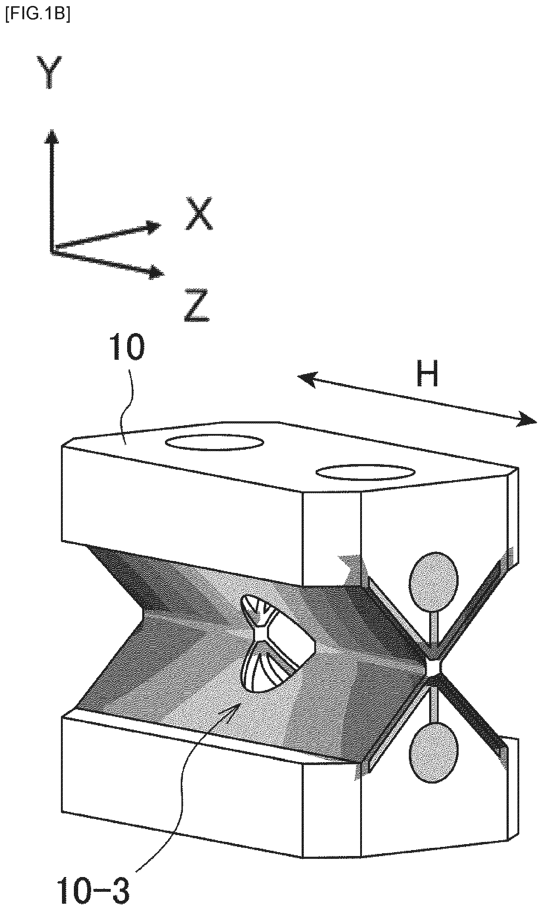

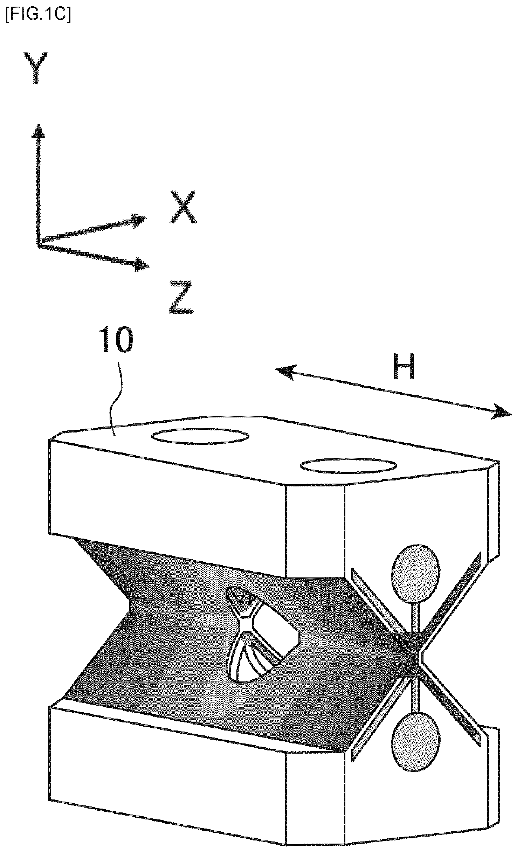

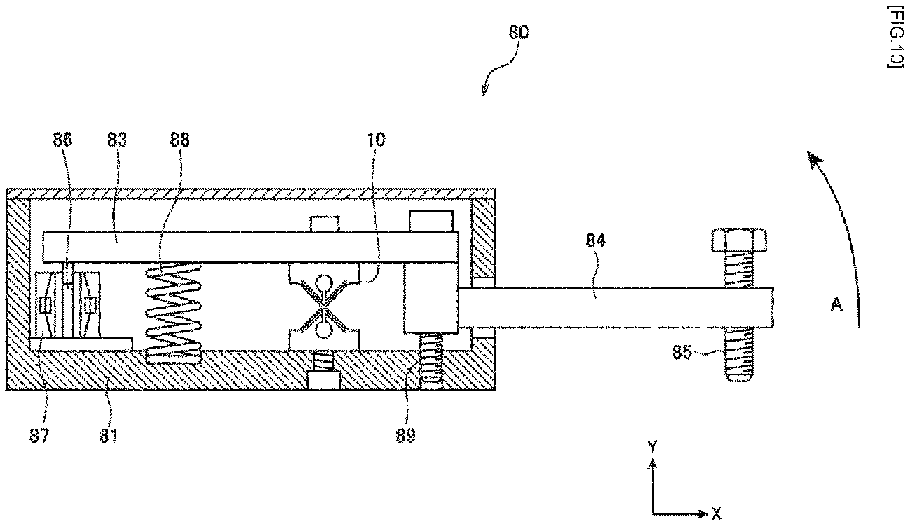

Hereinafter, embodiments will be described in detail with reference to the accompanying drawings. FIG. 1A to FIG. 1C are each a perspective view illustrating the stress distribution due to the load around each axis of a cross-shaped spring 10 according to the embodiment (when load is applied around each axis). FIG. 1A is when the rotational load is applied, FIG. 1B is when the torsional load (around X-axis) is applied, and FIG. 1C is when the torsional load (around Y-axis) is applied. In FIG. 1A to FIG. 1C, the rotational load is the rotational load around the Z-axis, and as will be explained in FIG. 10, which will be described below, corresponds to the measuring direction (A direction in FIG. 10) by a measuring head 80 including the cross-shaped spring 10.

The cross-shaped spring 10 illustrated in FIG. 1A to FIG. 1C is an integrated member obtained by performing a wire cutting process (cutting out) on a metal material. Stainless steel and other metal may be used for the metal material. It is preferable to treat the other metal (for example, iron) with anti-rust plating, after performing the wire cutting process. The cross-shaped spring 10 is configured of a cross-shaped thin plate part 10-1. Moreover, in the embodiment of FIG. 1, a hole is opened so as to penetrate through a center part 10-3 of the cross-shaped fulcrum.

The present inventors have found that there is room for improvement in the stable measurement results and/or protection properties on the workpiece surface, even when the rocking fulcrum member that has excellent features as described in JP 2005-249038 A is applied to a lever type detector or the like, and have been pursuing the cause. As a result, the present inventors have found that there is a correlation between the rigidity of the rocking fulcrum member in the rotational direction (around the Z-axis, measuring direction) and the performances. In other words, the present inventors have found that the measurement results may be unstable, when the rigidity in the rotational direction is high, because the force (measuring force) for pressing a contactor 85 against the workpiece fluctuates significantly. Moreover, as for the protection properties on the workpiece surface also, the present inventors have found that the workpiece surface is easily scratched, when the rigidity in the rotational direction is high, and the measuring force is too strong.

On the basis of the new findings described above, the present inventors have searched a new structure to adjust the rigidity of the rocking fulcrum member in the rotational direction. As a result, as described above, when a hole is opened so as to penetrate through the center part 10-3 of the cross-shaped fulcrum, it was successful in adjusting (reducing) the rigidity in the rotational direction (around Z-axis), while maintaining the rigidity in the torsional direction around the X-axis and around the Y-axis. Hereinafter, with reference to the accompanying drawings, a measuring head and a rocking fulcrum member according to the embodiment will be described in detail.

FIG. 10 is a sectional view of the measuring head 80 using the cross-shaped spring 10. The cross-shaped spring 10 is held in contact with an arm member 83 and a measuring head main body 81 so as the cross-shaped spring 10 is interposed therebetween, and functions as a rocking fulcrum of the measuring head 80.

A finger 84 is attached to the tip end of the arm member 83, and the contactor 85 is attached to the tip end of the finger 84. A core 86 of a differential transformer is attached to the rear end of the arm member 83, and a coil 87 of the differential transformer is attached to the measuring head main body 81.

Moreover, a compression coil spring 88 is provided between the measuring head main body 81 and the arm member 83 to apply the measured pressure to the contactor 85, and a stopper screw 89 provided on the measuring head main body 81 sets the rocking lower end of the arm member 83.

In the measuring head 80, the arm member 83 performs a seesaw motion with the cross-shaped spring 10 as the fulcrum. Hence, it is possible to detect the amount of movement of the contactor 85 when the contactor 85 is brought into contact with the workpiece W by the differential transformer, and perform accurate measurement.

During the measurement, a torsional load is applied to the cross-shaped spring 10, by the roughened surface of the measuring surface of the workpiece, vibration from outside, the contactor 85 coming into contact with the workpiece, offset of the measurement position, and the like. To stabilize the measured values of the measuring head 80, the cross-shaped spring 10 preferably has excellent rigidity (torsional rigidity) against the torsional load.

On the other hand, as described above, from the viewpoint of the stable measured values and the protection properties on the workpiece surface, the cross-shaped spring 10 is preferably flexible (rigidity is reduced) in the rotational direction (measuring direction). The cross-shaped spring 10 is required to have the contradictory mechanical characteristics as described above.

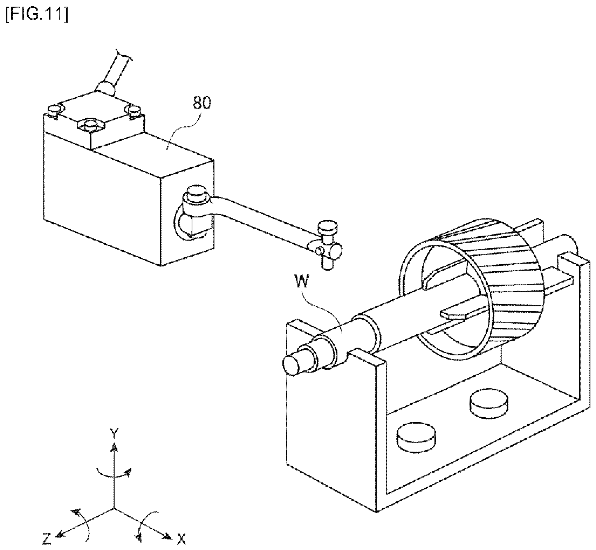

FIG. 11 is a perspective view illustrating the way how the measuring head 80 is measuring while a workpiece W is being processed. The mechanical characteristics described above required for the cross-shaped spring 10 will be explained again with reference to FIG. 11. The cross-shaped spring 10 needs to be flexible so that the same deformation can be obtained with a smaller load for the rotational load (measuring direction: arrow A in FIG. 10), that is, around the Z-axis. On the other hand, the rigidity against the torsional load around the X-axis and around the Y-axis needs to be high.

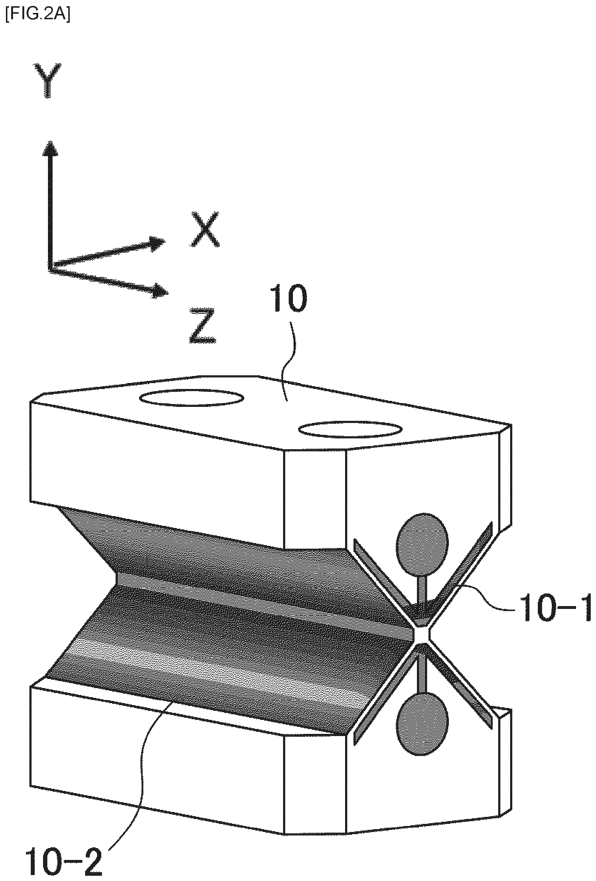

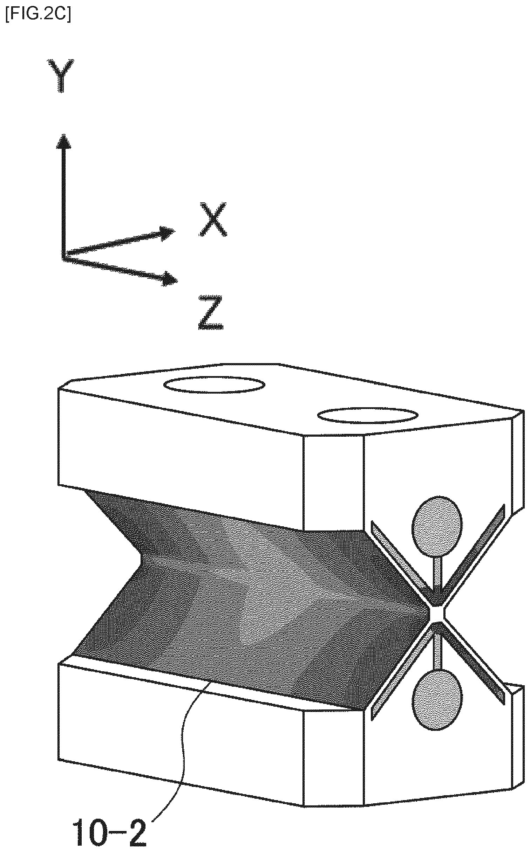

FIG. 2A to FIG. 2C are each a perspective view illustrating the stress distribution of a conventional cross-shaped spring 10. Similarly to the embodiment of FIG. 1A to FIG. 1C, the conventional cross-shaped spring 10 is integrally formed by cutting out metal using a wire cutting process. However, there is no hole at the center part of the thin plate part 10-1. Conditions other than the presence of a hole, for example, the plate thickness, the length, the crossing angle, and the like of the thin plate part 10-1 are the same. In FIG. 2A to FIG. 2C, darker colors indicate that the stress is larger.

As illustrated in FIG. 2A, an area where the stress due to the rotational load is increased, is in the vicinity of the crossing area of the thin plate part 10-1, and in the vicinity of a root 10-2 of the thin plate part 10-1. In FIG. 2A, the color in the areas is darker than that of the other portions.

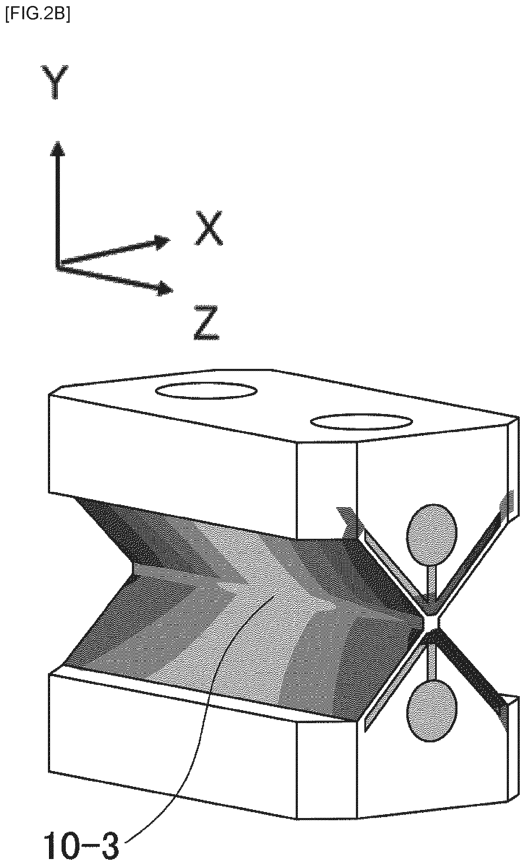

As illustrated in FIG. 2B, an area where the stress due to the torsional load around the X-axis is small, is in the vicinity of the center part 10-3 of the thin plate part 10-1. In FIG. 2B, the color in the vicinity of the center part 10-3 is light from top to bottom. **It is** apparent that the stress due to the torsional load around the Y-axis is also generated at the root 10-2 of the thin plate part 10-1.

In contrast to the cross-shaped spring 10 without a hole in FIG. 2A to FIG. 2C, in the embodiment of FIG. 1A to FIG. 1C, a hole is opened so as to penetrate through the center part (a block width H direction (Z-axis direction) and a height direction (Y-axis direction)) of the cross-shaped spring 10.

In other words, a hole is opened on the location where the stress generated by the rotational load is large. As a result, in the embodiment of FIG. 1A to FIG. 1C, the stress generated by the rotational load is increased. Although it is difficult to determine by comparing gradations of FIG. 1A to FIG. 1C and FIG. 2A to FIG. 2C, in FIG. 1A to FIG. 1C, the maximum value (calculated value) of the Mises (stress) in FIG. 1A to FIG. 1C is about 1.2 times greater than that of FIG. 2A to FIG. 2C. On the other hand, it is apparent that the magnitude of stress due to the torsional load remains the same around the X-axis and the Y-axis, and there is no significant difference in the distributions (rigidity is maintained).

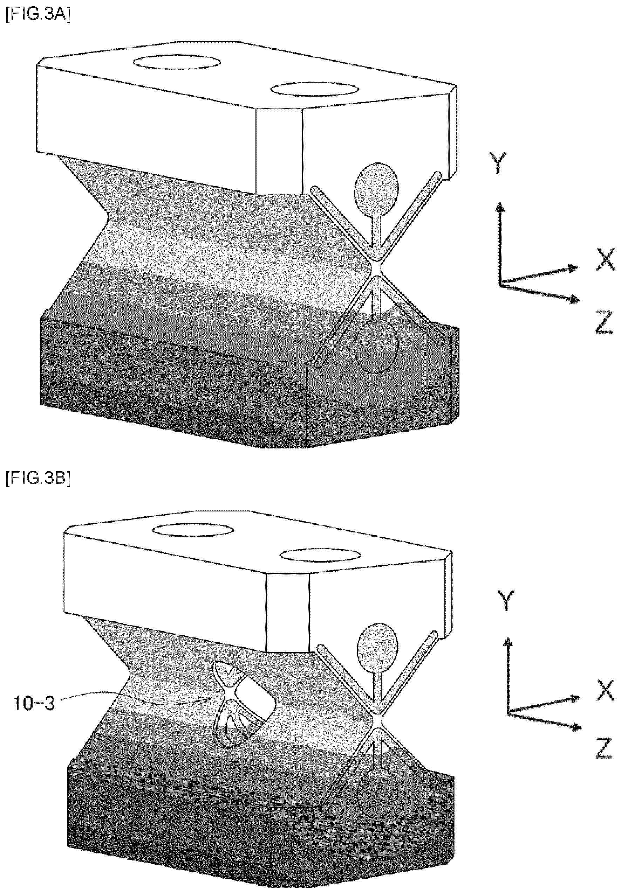

FIG. 3A and FIG. 3B are perspective views illustrating the deformation distributions due to the rotational load, when there is no hole (conventional example, FIG. 3A) and when there is a hole (embodiment, FIG. 3B). In FIG. 3A and FIG. 3B, darker colors indicate that the deformation is large. In FIG. 3B, by opening a hole in the vicinity of the center part 10-3, the color is dark throughout. This indicates that the deformation generated by the same rotational load is increased.

In other words, in the cross-shaped spring 10 with a hole, an increase in the deformation generated by the same rotational load indicates that the same deformation can be obtained with a smaller load for the rotational load (measuring direction: arrow A in FIG. 10), that is, around the Z-axis.

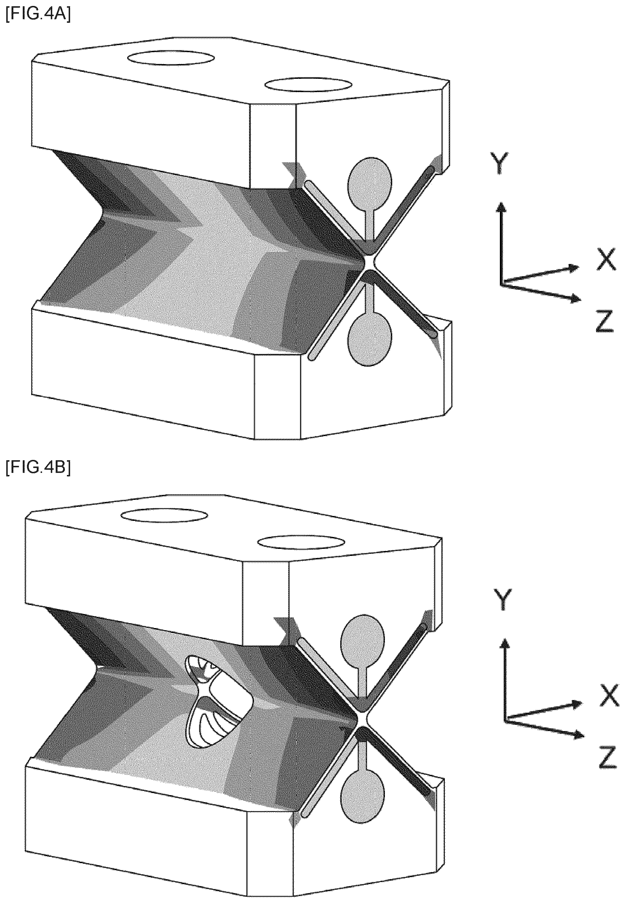

FIG. 4A and FIG. 4B are perspective views illustrating the stress distributions due to the torsional load around the X-axis, when there is no hole (conventional example, FIG. 4A) and when there is a hole (embodiment, FIG. 4B). In FIG. 4A and FIG. 4B, darker colors indicate that the stress is larger. The comparison between FIG. 4A and FIG. 4B indicates that the magnitude of stress generated by the torsional load around the X-axis is about the same between the conventional example and the present embodiment, and there is no significant difference in the distribution. That is, in terms of the torsional load around the X-axis, the stress is not applied much at the center of the thin plate part of the cross-shaped spring 10. Hence, the rigidity does not change much even if a hole is opened. This was not previously known, and is the new idea of the present inventors, and is first confirmed by creating a precise verification model supported by the advanced simulation technology.

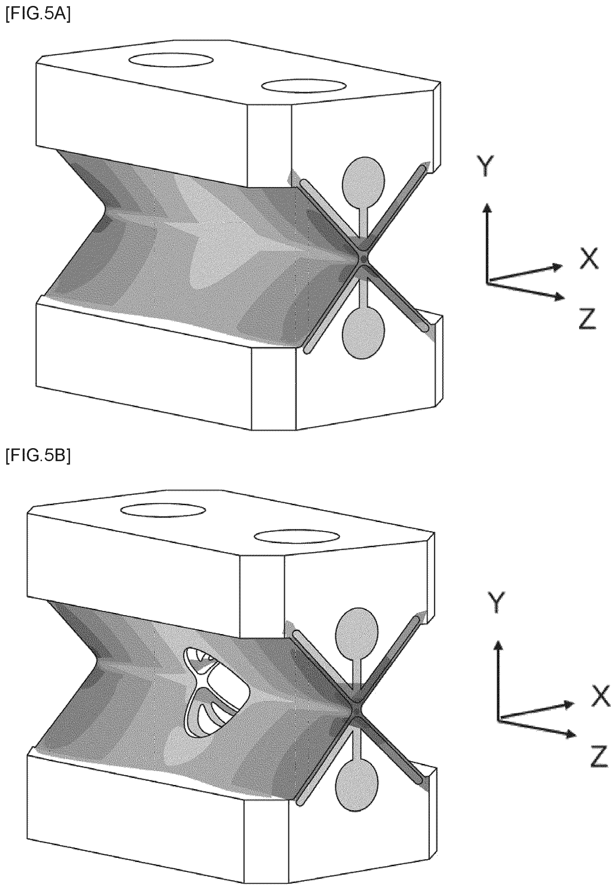

FIG. 5A and FIG. 5B are perspective views illustrating and comparing the stress distributions due to the torsional load around the Y-axis, when there is no hole (conventional example, FIG. 5A) and when there is a hole (embodiment, FIG. 5B). In FIG. 5A and FIG. 5B, darker colors indicate that the stress is larger. FIG. 5A and FIG. 5B indicate that the magnitude of stress generated by the torsional load around the Y-axis is about the same between the conventional example and the embodiment, and there is no significant difference in the distributions. That is, with the torsional load around the Y-axis also, the stress is not applied much at the center of the thin plate part of the cross-shaped spring 10. Hence, the rigidity does not change much even if a hole is opened. Similar to the torsional load around the X-axis as described above, this was also not previously known.

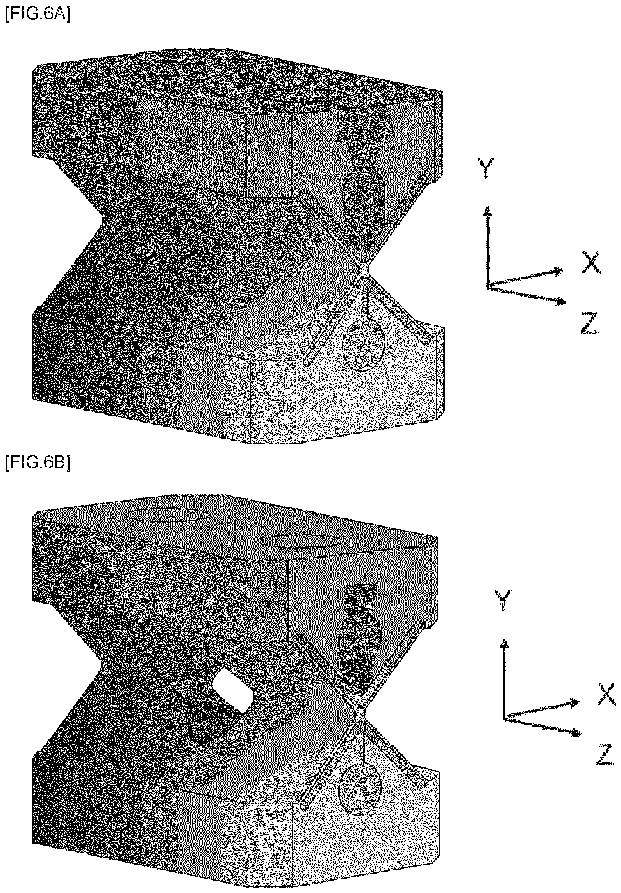

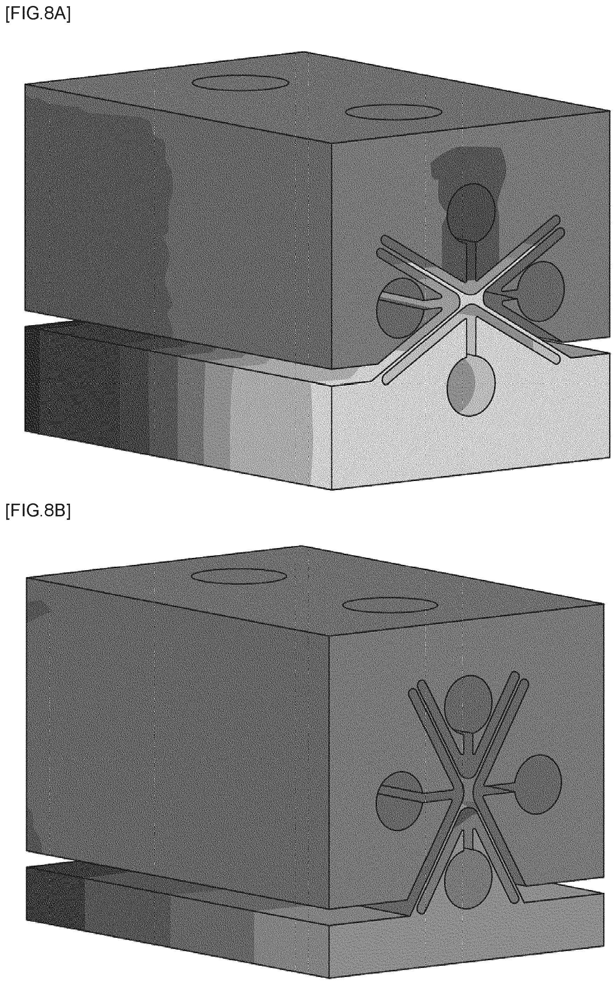

FIG. 6A and FIG. 6B are perspective views illustrating and comparing the deformation distributions in the Y-axis direction due to the torsional load around the X-axis, when there is no hole (conventional example, FIG. 6A) and when there is a hole (embodiment, FIG. 6B). In FIG. 6A and FIG. 6B, shades of colors indicate the deformation and its direction. In other words, a portion with darker color indicates that the upward (positive direction of the Y-axis) deformation is larger, and a portion with lighter color indicates that the downward (negative direction of the Y-axis) deformation is larger (the same applies to FIG. 8A and FIG. 8B, which will be described below). According to FIG. 6A and FIG. 6B, it is apparent that the shade distributions are approximately the same, and the amount and direction of the deformation in the Y-axis direction generated by the torsional load around the X-axis are almost the same between the conventional example and the embodiment.

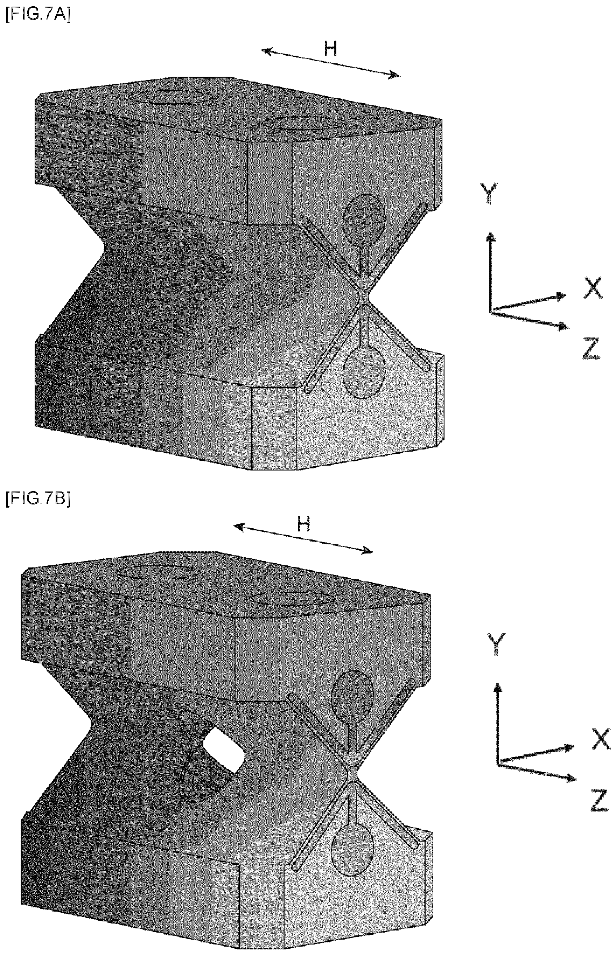

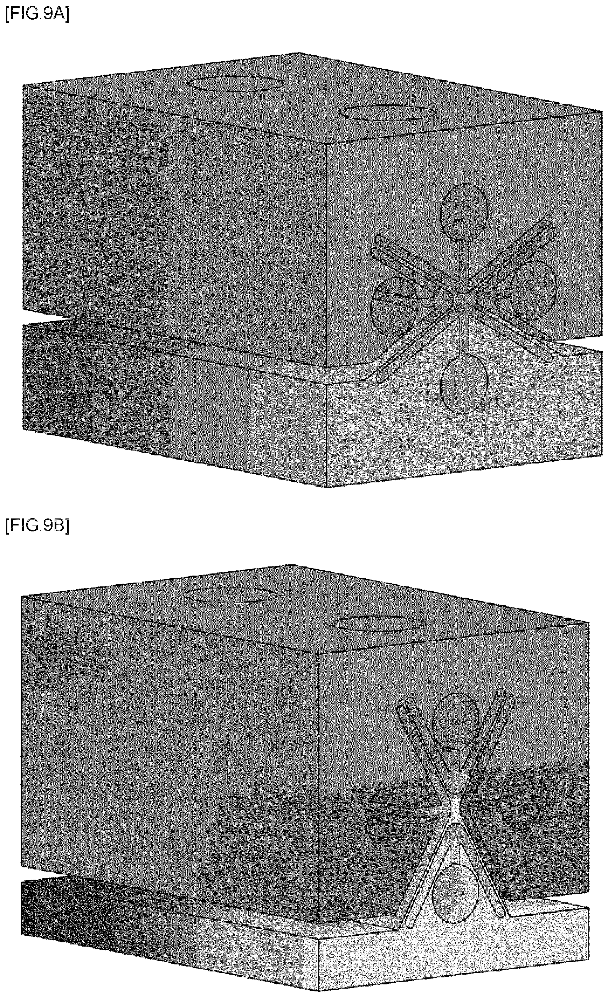

FIG. 7A and FIG. 7B are perspective views illustrating and comparing the deformation distributions in the X-axis direction due to the torsional load around the Y-axis, when there is no hole (conventional example, FIG. 7A) and when there is a hole (embodiment, FIG. 7B). In FIG. 7A and FIG. 7B, shades of colors indicate the deformation and its direction. In other words, a portion with darker color indicates that the deformation toward the far side (positive direction of the X-axis) is larger, and a portion with lighter color indicates that the deformation toward the near side (negative direction of the X-axis) is larger (the same applies to FIG. 9A and FIG. 9B, which will be described below). According to FIG. 7A and FIG. 7B, it is apparent that the shade distributions are approximately the same, and the amount and direction of the deformation in the X-axis direction generated by the torsional load around the Y-axis are almost the same between the conventional example and the embodiment.

As described above, in the cross-shaped spring 10, when a hole is opened so as to penetrate through the center of the cross-shaped fulcrum (embodiment), compared to the one without a hole (conventional example), the magnitude of stress does not change with the torsional load, that is the load "other than" the measuring direction, and the stress is increased with the load in the rotational direction (measuring direction). That is, the cross-shaped spring 10 is flexible because the same deformation can be obtained in the measuring direction with a smaller load, and the rigidity in the other direction, and to the torsional load around the X-direction, and around the Y-axis direction can be maintained.

Therefore, when the same load is applied in the rotational direction of the cross-shaped fulcrum, the deformation of the fulcrum with a hole (embodiment) is larger than that without a hole (conventional example), and the same deformation can be obtained with a smaller load. Hence, the reaction force on the cross-shaped fulcrum is reduced. Moreover, when the same load is applied in the torsional direction to the one with a hole opened so as to penetrate through the center of the cross-shaped fulcrum (embodiment), and to the one without a hole (conventional example), the stress does not change much (rigidity is maintained).

That is, in the cross-shaped spring 10, because the stress on the torsional load at the center of the thin plate part 10-1 is small, the effect on the torsional rigidity is small even if a hole is opened on the center part. Then, in the fulcrum with a hole (embodiment), it is possible to lower the reaction force of the fulcrum without lowering the rigidity, or increase the rigidity without increasing the reaction force of the fulcrum. Consequently, it is possible to widen the selection of materials, and further suppress the required load while increasing the deformation in the measuring direction.

Then, the effects of obtaining the same deformation with a smaller load, and providing sufficient rigidity to the torsional load in the other direction, that is, the effects of providing high sensitivity in the measuring direction and increasing rigidity in the other direction, can be adjusted by the size of the hole. Then, although the diameter of the hole is not particularly limited, as one form, it is desirable to set the diameter of the hole to about 1/4 to 1/2 width, preferably, approximately 1/3 width of the block width H of the cross-shaped spring 10. For example, if the block width H is 12 mm, it is practically preferable to set the hole diameter to 3 to 6 mm.

Moreover, the shape of the hole is not limited to a round hole, and may also be an elongated hole or a polygon. However, a round hole or an elongated hole is preferable. It is preferable that the periphery of the hole is rounded. By making the periphery of the hole rounded, it is possible to further avoid unnecessary stress concentration, and further suppress the rupture. If the shape of the hole is a polygon, the "periphery of the hole is rounded" means that the corner portions are rounded.

Furthermore, the hole position is preferably at the center part in the block width H direction (Z-axis direction). On the other hand, as illustrated in FIG. 4A, FIG. 4B, FIG. 5A, and FIG. 5B, the hole position may be within a range where (almost) no stress is applied by the torsional load (X-axis and Y-axis), that is, a range of light color. It is practically preferable to set the hole position in a range about 1/4 of the block width H from the center part of the cross-shaped fulcrum.

Moreover, in the cross-shaped spring 10 integrally formed by the cut out using wire cut electric discharge machining, the processing steps are increased than that of the conventional one, because a hole needs to be opened. However, an automatic machine can be used during blanking prior to processing the thin plate part 10-1. Also, when taking into account the entire processing time, the wire processing time of the thin plate part 10-1 is long, but the time required for opening a hole is short compared thereto. Hence, the hole opening process does not increase the cost much.

Furthermore, from the viewpoint that the stress is hardly applied to the center part, the same effects can be obtained by a structure including a plurality of independent cross-shaped springs separated in the block width H direction (Z-axis direction). However, the cross-shaped fulcrum needs to be assembled accurately, and the embodiment illustrated in the drawings is advantageous in terms of easy assembly.

FIG. 8A, FIG. 8B, FIG. 9A, and FIG. 9B are perspective views illustrating and comparing the deformation distributions depending on the difference in the crossing angles of the thin plate part 10-1. FIG. 8A, FIG. 8B, FIG. 9A, and FIG. 9B are drawings for explaining the deformation distributions due to the difference in the crossing angles, using the cross-shaped spring of the conventional example without a hole penetrating through the center part.

FIG. 8A and FIG. 8B illustrate the deformation in the vertical (Y-axis) direction due to the torsional load (around X-axis), and FIG. 9A and FIG. 9B illustrate the deformation in the longitudinal (X-axis) direction due to the torsional load (around Y-axis).

With FIG. 8A and FIG. 8B, it is apparent that the deformation in the vertical (Y-axis) direction due to the torsional load (around X-axis) becomes small, when the crossing angle in the Y-axis direction is a narrow angle (FIG. 8B). With FIG. 9A and FIG. 9B, it is apparent that the deformation in the longitudinal (X-axis) direction due to the torsional load (around Y-axis) becomes small, when the crossing angle in the X-axis direction is a narrow angle (FIG. 9A).

On the other hand, when the crossing angle is approximately 90 degrees, it is preferable because the tolerance (rigidity) against the torsional load with respect to any direction is increased.

That is, if the direction of friction from an object to be measured is the torsional load (X-axis), it is preferable to set the crossing angle in the Y-axis direction to a narrow angle, because the rigidity is increased. On the contrary, if the direction of friction is the torsional load (Y-axis), it is preferable to set the crossing angle in the X-axis direction to a narrow angle, because the rigidity is increased. Consequently, it is possible to increase the rigidity in a specific axis direction, by setting one of the crossing angles in the X-axis direction and the Y-axis direction to a narrower angle than the other. Hence, it is possible to further suppress the measurement values from becoming unstable, by the vibration from outside, the impact when the contactor comes into contact with an object to be measured, and the like.

The results of FIG. 8A, FIG. 8B, FIG. 9A, and FIG. 9B described above are explained using the cross-shaped spring of the conventional example. However, the same tendency can also be seen in the cross-shaped spring according to the embodiment with a hole penetrating through the center part.

From the reference examples of FIG. 8A, FIG. 8B, FIG. 9A, and FIG. 9B, it is apparent that the rigidity (effects of suppressing deformation) of the torsional load (around the X-axis) and the torsional load (around the Y-axis) can be sufficiently obtained. The same applies to the cross-shaped spring according to the embodiment (that is, is maintained).

On the other hand, although the results are not illustrated, as described above, the cross-shaped spring according to the embodiment with a hole penetrating through the center part is superior than the cross-shaped spring of the conventional example, in terms of reducing the rigidity in the rotational direction (measuring direction).

### Reference Signs List

- 10: cross-shaped spring
- 10-1: thin plate part
- 10-2: root
- 10-3: center part
- 80: measuring head
- 81: measuring head main body
- 83: arm member
- 84: finger
- 85: contactor
- 86: core
- 87: coil
- 88: compression coil spring
- 89: stopper screw
- H: block width
- W: workpiece

## Claims

1. A rocking fulcrum member used in a measuring head (80), the member being a rocking fulcrum member configured to support an arm member (83) having a tip end to which a contactor (85) is attached, the measuring head (80) detecting an amount of movement of the contactor (85) by detecting an amount of movement of the arm member (83) making a seesaw motion, wherein the rocking fulcrum member is configured as a cross-shaped spring (10) with a cross-shaped thin plate part (10-1), **characterized in that** the cross-shaped spring (10) having a hole penetrating a center part (10-3) of the cross-shaped spring (10).

2. The rocking fulcrum member according to claim 1, wherein diameter of the hole is 1/4 to 1/2 width of a block width H of the cross-shaped spring (10).

3. The rocking fulcrum member according to claim 1 or 2, wherein in the cross-shaped spring (10), one of crossing angles in an X-axis direction and a Y-axis direction is a narrower angle than another.

4. A measuring head (80), comprising a rocking fulcrum member according to any of the claims 1 to 3.

5. The measuring head (80) according to claim 4, wherein shape of the hole is an elongated hole or a polygon, and a periphery of the hole is rounded.

6. The measuring head (80) according to claim 4 or 5, wherein the cross-shaped spring (10) is integrally formed by cutting out metal using a wire cutting process.

## Patentansprüche

1. Schwingdrehpunktelement, das in einem Messkopf (80) verwendet wird, wobei das Element ein Schwingdrehpunktelement ist, das so ausgestaltet ist, dass es ein Armelement (83) stützt, das ein Spitzenende aufweist, an dem ein Kontaktgeber (85) angebracht ist, wobei der Messkopf (80) einen Bewegungsbetrag des Kontaktgebers (85) mittels Feststellens eines Bewegungsbetrags des Armelements (83) feststellt, das eine Wippbewegung vollführt, wobei das Schwingdrehpunktelement als eine kreuzförmige Feder (10) mit einem kreuzförmigen dünnen Plattenteil (10-1) ausgestaltet ist, **dadurch gekennzeichnet, dass** die kreuzförmige Feder (10) ein Loch aufweist, das einen mittleren Teil (10-3) der kreuzförmigen Feder (10) durchdringt.

2. Schwingdrehpunktelement nach Anspruch 1, wobei ein Durchmesser des Lochs 1/4 bis 1/2 einer Blockbreite H der kreuzförmigen Feder (10) beträgt.

3. Schwingdrehpunktelement nach Anspruch 1 oder 2, wobei in der kreuzförmigen Feder (10) einer der sich kreuzenden Winkel in einer X-Achsenrichtung und einer Y-Achsenrichtung ein engerer Winkel ist als ein anderer.

4. Messkopf (80), der ein Schwingdrehpunktelement nach einem der Ansprüche 1 bis 3 umfasst.

5. Messkopf (80) nach Anspruch 4, wobei eine Form des Lochs ein Langloch oder ein Vieleck ist und ein Umfang des Lochs abgerundet ist.

6. Messkopf (80) nach Anspruch 4 oder 5, wobei die kreuzförmige Feder (10) einteilig durch Ausschneiden von Metall unter Verwendung eines Drahtschneideverfahrens gebildet wird.

## Revendications

1. Un élément de pivot basculant utilisé dans une tête de mesure (80), ledit élément étant un élément de pivot basculant configuré pour supporter un élément formant bras (83), présentant une extrémité à laquelle est fixé un contact (85), la tête de mesure (80) détectant l'amplitude du mouvement du contact (85) en détectant l'amplitude de déplacement de l'élément formant bras (83) lorsqu'il effectue un mouvement de balancier, l'élément de pivot basculant étant conçu sous la forme d'un ressort (10) en forme de croix présentant une partie en plaque mince (10-1) en forme de croix, **caractérisé en ce que** le ressort (10) en forme de croix présente un trou traversant une partie centrale (10-3) du ressort (10) en forme de croix.

2. L'élément de pivot basculant selon la revendication 1, dans lequel le diamètre du trou est compris entre 1/4 et 1/2 de la largeur d'ensemble H du ressort (10) en forme de croix.

3. L'élément de pivot basculant selon la revendication 1 ou la revendication 2, dans lequel, dans le ressort (10) en forme de croix, l'un des angles de croisement dans la direction de l'axe X et dans la direction de l'axe Y est plus petit que l'autre.

4. Une tête de mesure (80), comprenant un élément de pivot basculant selon l'une quelconque des revendications 1 à 3.

5. La tête de mesure (80) selon la revendication 4, dans laquelle la forme du trou est celle d'un trou allongé ou d'un polygone, et le pourtour du trou est arrondi.

6. La tête de mesure (80) selon la revendication 4 ou la revendication 5, dans laquelle le ressort (10) en forme de croix est formé d'un seul tenant par découpage de métal à l'aide d'un procédé de découpe au fil.
